# EUROPÄISCHE PATENTSCHRIFT

(11) **EP 4 201 724 B1**
(45) Veröffentlichungstag und Bekanntmachung des Hinweises auf die Patenterteilung: **03.04.2024**
(21) Anmeldenummer: 22215162.3
(22) Anmeldetag: 20.12.2022
(51) Int. Cl.: B60K 15/05, B60J 7/20

(54) **FAHRZEUG MIT EINER BEWEGBAREN KLAPPE**
VEHICLE WITH A MOVABLE FLAP
VÉHICULE AVEC UN VOLET MOBILE

(30) Priorität: 22.12.2021 DE 102021134394; 09.03.2022 DE 102022105588
(43) Veröffentlichungstag der Anmeldung: 28.06.2023
(73) Patentinhaber: Valmet Automotive Oy, 23500 Uusikaupunki (FI)
(72) Erfinder: Kreiling, Nils, 49080 Osnabrück (DE)
(74) Vertreter: Kronthaler, Schmidt & Coll.

(56) Entgegenhaltungen:
- DE-A1-102006 055 268
- DE-A1-102007 013 517
- DE-A1-102020 109 829
- DE-T2-602005 000 403

## Beschreibung

Die erfindungsgemäße Technologie betrifft ein Fahrzeug mit einer bewegbaren Klappe zur Abdeckung einer Öffnung einer Fahrzeugkarosserie nach der im Oberbegriff des Patentanspruches 1 näher definierten Art.

Aus der DE 10 2007 013 517 A1 ist eine Betätigungsvorrichtung für ein bewegliches Verkleidungselement bekannt, das als Gestängeklappe, auch Gestängeaustrittsklappe genannt, ausgeführt sein kann. Zusätzlich wird ein Cabriolet-Fahrzeug mit einem solchen Verkleidungselement oder einer solchen Gestängeklappe vorgeschlagen. Die Betätigungsvorrichtung bewirkt während eines gleichsinnigen Krafteintrags zumindest zwei gegenläufige Bewegungen des Verkleidungselements. Ist die Gestängeklappe als Verkleidungselement ausgeführt, wird der gleichsinnige Krafteintrag durch eine Kopplung der Betätigungsvorrichtung an bewegliche Teile eines Cabriolet-Verdecks realisiert. Die beiden gegenläufigen Bewegungen führen sowohl beim Öffnen wie auch beim Schließen des Verdecks anfänglich zum Öffnen der Gestängeklappe und zum Abschluss der Verdeckbewegung zum Schließen der Gestängeklappe.

Des Weiteren ist in der DE 10 2006 055 268 A1 ein Cabriolet-Fahrzeug mit einem Verdeck beschrieben, das in einem Verdeck-Ablagebereich versenkbar ist. Das Verdeck ist beidseitig an seitlichen Verdeck-Gestängeteilen geführt, die bei einem Öffnungs- und Schließvorgang des Verdecks Aussparungen durchgreifen, die jeweils in einem oberen Seitenrandbereich der Fahrzeugkarosserie vorgesehen sind. Darüber hinaus umfasst das Cabriolet-Fahrzeug eine Abdeccklappe, die die Aussparung verschließt bzw. freigibt und die aus einer im Wesentlichen horizontalen Schließstellung in eine im Wesentlichen vertikale Öffnungsstellung bewegbar ist. Dabei weist die Abdeckklappe einen bezogen auf eine Fahrzeuglängsrichtung im Wesentlichen senkrechten ersten Führungszapfen auf, der in ein seitlich in der Karosserie eingebrachtes Führungselement eingreift. In ihrer Öffnungsstellung ist die Abdeckklappe bezogen auf die Fahrzeuglängsrichtung in einem vor den Verdeck-Gestängeteilen des offenen Verdecks befindlichen Bereich angeordnet.

Zur Betätigung der vorstehend näher beschriebenen Mechanismen sind unerwünscht hohe Systemkräfte erforderlich. Zusätzlich sind die Mechanismen in ihren Endlagen jeweils nur in unzureichender Art und Weise gegen unerwünschte Stellbewegungen gesichert.

Es ist eine bevorzugte Aufgabe der erfindungsgemäßen Technologie, zumindest einen Nachteil des bekannten Standes der Technik zu verringern oder zu beheben oder eine alternative Lösung vorzuschlagen. Es ist insbesondere eine bevorzugte Aufgabe der hier offenbarten Technologie, ein Fahrzeug mit einer bewegbaren Klappe bereitzustellen, das hinsichtlich mindestens eines der folgenden Faktoren verbessert ist: Herstellungskosten, Komplexität der Herstellung, Bauraumausnutzung, Betriebssicherheit, Nachhaltigkeit und/oder Bauteilzuverlässigkeit.

Eine besonders bevorzugte Aufgabe wird darin gesehen, die Klappe mit möglichst geringen Systemkräften zu betätigen und in ihren Endlagen auf konstruktiv einfache Art und Weise gegen unerwünschte Stellbewegungen abzusichern.

Diese Aufgabe(n) wird/werden mit einem Fahrzeug mit einer bewegbaren Klappe mit den Merkmalen des Patentanspruches 1 gelöst. Vorteilhafte Weiterbildungen sind Gegenstand der Unteransprüche sowie der nachfolgenden Beschreibung entnehmbar.

Es wird ein Fahrzeug mit einer bewegbaren Klappe vorgeschlagen. Die Klappe ist über einen Mehrgelenk-Mechanismus zwischen einer Offenstellung, in der eine Öffnung einer Fahrzeugkarosserie von der Klappe freigegeben ist, und einer Schließstellung verstellbar, in der die Öffnung von der Klappe geschlossen ist. Die Klappe ist um eine karosserieseitig festgelegte Drehachse eines ersten Drehgelenks drehbar ausgeführt. Ein Hebel des Mehrgelenk-Mechanismus steht über ein zweites Drehgelenk drehbar mit der Klappe in Verbindung. Der Hebel ist zusätzlich über ein drittes Drehgelenk mit einem Drehelement drehbar verbunden, das um eine karosserieseitig festgelegte Drehachse eines vierten Drehgelenks drehbar ausgeführt ist.

Erfindungsgemäß ist das Drehelement von einer Federeinrichtung mit einer in Richtung einer Drehstellung des Drehelementes wirkenden Federkraft beaufschlagt, wobei das Drehelement die Drehstellung je nach Ausführung des Fahrzeuges in der Offenstellung oder in der Schließstellung einnimmt. Zusätzlich ist am Drehelement über einen Bowdenzug jeweils eine der Federkraft der Drehfeder entgegenwirkende Betätigungskraft anlegbar.

Damit ist die Klappe durch die Federeinrichtung in seine Offenstellung oder in seine Schließstellung überführbar und zusätzlich auch in der Schließ- oder Offenstellung auf konstruktiv einfache Art und Weise haltbar. Zusätzlich ist die Klappe mittels des Bowdenzugs und entgegen der Federkraft der Federeinrichtung in seine Schließ- oder seine Offenstellung überführbar und von diesem in der Schließ- oder Offenstellung in gewünschter Art und Weise haltbar sowie gegen unerwünschte Stellbewegungen in der Schließ- oder Offenstellung haltbar bzw. gesichert.

In einer bevorzugten einfachen Ausführung ist der Mehrgelenk-Mechanismus als Viergelenk-Mechanismus ausgebildet, jedoch kann er je nach Anwendungsfall z. B. auch als Siebengelenk-Mechanismus oder mit einer anderen Anzahl an Gelenken ausgeführt sein.

Bei einer konstruktiv einfachen und bauraumgünstigen Ausführungsform ist das Drehelement als Rolle ausgeführt, auf dem der Bowdenzug während einer Betätigung der Klappe auf- und abwickelbar ist.

Bei einer vorteilhaften Ausführungsform des erfindungsgemäßen Fahrzeugs ist das dritte Drehgelenk in der Schließstellung der Klappe in Längsrichtung zwischen dem zweiten Drehgelenk und dem vierten Drehgelenk angeordnet. Die Klappe ist dann mit geringen Systemkräften in der Schließstellung durch die Federeinrichtung oder den Bowdenzug haltbar. Dies ist der Fall, da dann auf einfache Art und Weise eine sogenannte Streckstellung des Viergelenk-Mechanismus realisierbar ist.

Bei einer weiteren Ausführungsform des erfindungsgemäßen Fahrzeugs kann das erste Drehgelenk in der Schließstellung der Klappe in Längsrichtung zwischen dem zweiten Drehgelenk und dem vierten Drehgelenk angeordnet sein.

Ist das dritte Drehgelenk in der Schließstellung der Klappe zwischen dem ersten Drehgelenk und dem vierten Drehgelenk positioniert, ist die Klappe wiederum mit geringen Systemkräften in der Schließstellung haltbar.

Zusätzlich kann es vorgesehen sein, dass das erste Drehgelenk in der Schließstellung der Klappe in Längsrichtung zwischen dem zweiten Drehgelenk und dem dritten Drehgelenk angeordnet ist. Diese Anordnung der Drehgelenke zueinander begünstigt wiederum die Möglichkeit, die Klappe mit geringen Systemkräften in ihrer Schließstellung zu halten.

Der Hebel und das Drehelement können in der Schließstellung der Klappe wenigstens annähernd in einer Strecklage vorliegen, in der die Drehachsen des zweiten Drehgelenks, des dritten Drehgelenks und des vierten Drehgelenks auf einer Geraden liegen. Dann ist die Klappe mit besonders geringen Systemkräften in ihrer Schließstellung haltbar.

Die Drehachse des dritten Drehgelenks kann in der Offenstellung der Klappe in Bezug auf die Drehachsen des ersten Drehgelenks, des zweiten Drehgelenks und des vierten Drehgelenks eine Übertotpunktlage aufweisen. Dann resultieren auf konstruktiv einfache Art und Weise aus Stellkräften, die an der Klappe anliegen und die an der Klappe in Richtung ihrer Schließstellung oder ihrer Offenstellung angreifen, jeweils das Drehelement in Richtung der Drehstellung, die das Drehelement in der Offenstellung der Klappe aufweist, betätigende Stellkräfte.

Die Klappe kann in ihrer Offenstellung gegenüber der Schließstellung um die Drehachse des ersten Drehgelenks in das Innere der Fahrzeugkarosserie verschwenkbar sein. Dadurch ist die Klappe in der Offenstellung durch die Fahrzeugkarosserie gegen Beschädigungen geschützt.

Bei einer konstruktiv einfachen und mit geringem Aufwand montierbaren Ausführungsform des erfindungsgemäßen Fahrzeuges ist die Federeinrichtung als Schenkelfeder ausgeführt.

Die Erfindung ist nicht auf die angegebene Kombination der Merkmale der unabhängigen Ansprüche oder der hiervon abhängigen Ansprüche beschränkt. Es ergeben sich darüber hinaus Möglichkeiten, einzelne Merkmale auch soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch Verwendung von Bezugszeichen soll den Schutzumfang der Ansprüche nicht beschränken.

Die vorgeschlagene bewegbare Klappe eignet sich prinzipiell zur Abdeckung jeder Karosserieöffnung, abgesehen von Fahrzeugtüröffnungen und anderen Öffnungen derartiger Dimension. Insbesondere eignet sich die bewegbare Klappe als Tankdeckel zur Abdeckung einer Tankmulde oder als Ladedeckel einer Lademulde eines Fahrzeugs mit elektrischem Antrieb. Bei einem Cabriolet-Fahrzeug kann eine derartige Klappe als sogenannte Gestängeaustrittsklappe zur Abdeckung einer Karosserieöffnung, durch welche Gestängeteile eines Verdeckgestänges bei einer Verdeckbewegung geführt werden, dienen.

Die hier offenbarte Technologie wird nun anhand der Figuren der Zeichnung näher erläutert, wobei die Figuren wie auch die nachfolgende Beschreibung nur zu illustrativen Zwecken und nicht zum Zweck der Beschränkung der Erfindung dienen.

Es zeigt:
- Fig. 1: eine schematische Seitenansicht eines Fahrzeuges mit einer Klappe, die eine Öffnung der Fahrzeugkarosserie verschließt;
- Fig. 2: eine zweidimensionale Schnittansicht entlang einer in Fig. 1 näher gekennzeichneten Schnittlinie II-II bei durch die Klappe geschlossener Öffnung; und
- Fig. 3: eine Fig. 2 entsprechende Darstellung, wobei die Klappe die Öffnung freigibt.

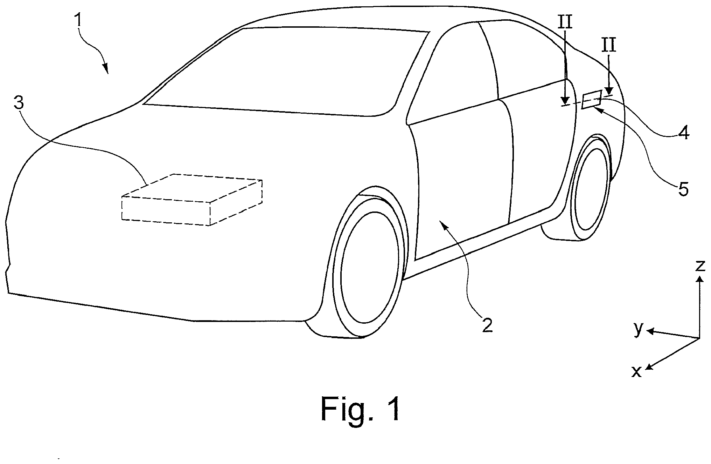

Bezug nehmend auf Fig. 1 ist ein Fahrzeug 1 mit einer Fahrzeugkarosserie 2 und einer Antriebseinheit 3 gezeigt, wobei die Antriebseinheit 3 wenigstens eine Brennkraftmaschine, wenigstens eine elektrische Maschine oder auch eine Kombination aus wenigstens einer Brennkraftmaschine und wenigstens einer elektrischen Maschine umfassen kann.

Vorliegend weist das Fahrzeug 1 heckseitig eine Klappe 4 auf, die zum Verschließen und Freigeben einer Öffnung 5 in der Fahrzeugkarosserie 2 vorgesehen ist. Die Öffnung 5 ist bei der gezeigten Ausführung an einer so genannten Lademulde vorgesehen, wobei durch die Öffnung 5 ein elektrisches Steckersystem mit einem entsprechenden Koppelelement, das innerhalb der Fahrzeugkarosserie bzw. unterhalb der Außenhaut des Fahrzeuges 1 angeordnet ist, in Wirkverbindung bringbar ist, um einen elektrischen Energiespeicher des Fahrzeuges 1 aufladen zu können. Die Klappe 4 stellt hier somit eine sogenannte Ladeklappe dar, die im Wesentlichen als ein ebenes bzw. plattenartiges Element ausgeführt ist.

In der gezeigten Ausführung kann die Klappe jedoch auch als sogenannte Gestängeklappe eines Cabriolet-Fahrzeugs, welche den Durchtritt eines Verdeckgestänges durch einen Karosserieabschnitt erlaubt, dienen.

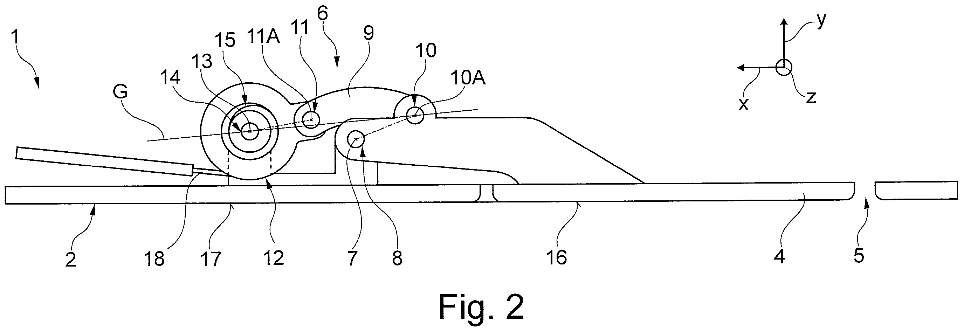

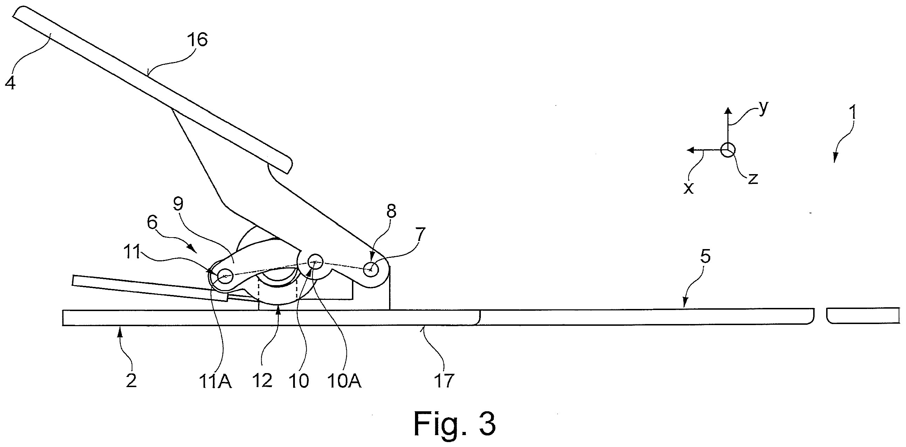

Fig. 2 und Fig. 3 zeigen jeweils eine Längsschnittansicht eines Bereiches des Fahrzeuges 1 entlang einer in Fig. 1 näher gekennzeichneten Schnittlinie II-II, in dem die Klappe 4 angeordnet ist. Dabei zeigt Fig. 2 die Klappe 4 in einem Betriebszustand, in dem die Klappe 4 die Öffnung 5 der Fahrzeugkarosserie 2 vollständig verschließt. Eine Seitenfläche 16 der Klappe 4 schließt in der Schließstellung der Klappe 4 bündig mit einer Außenseite 17 der Fahrzeugkarosserie 2 ab. Im Unterschied dazu ist die Klappe 4 in Fig. 3 in einem Betriebszustand gezeigt, in dem die Klappe 4 unter einen angrenzenden Bereich der Fahrzeugkarosserie 2 abgesenkt bzw. verlagert ist und die Öffnung 5 im Wesentlichen vollständig freigibt.

Zum Verschwenken der Klappe 4 unter den angrenzenden Bereich der Fahrzeugkarosserie 2 ist ein hier als Viergelenk-Mechanismus 6 ausgebildeter Mehrgelenk-Mechanismus vorgesehen. Die Klappe 4 ist über den Viergelenk-Mechanismus 6 zwischen der Offenstellung, in der die Öffnung 5 der Fahrzeugkarosserie 2 von der Klappe 4 freigegeben ist, und der Schließstellung der Klappe 4 verstellbar, in der die Öffnung 5 von der Klappe 4 verschlossen ist. Dabei ist die Klappe 4 in ihrer Offenstellung gegenüber der Schließstellung um die Drehachse 7 des ersten Drehgelenks 8 in das Innere der Fahrzeugkarosserie 2 verschwenkt.

Dabei ist die Klappe 4 um eine karosserieseitig festgelegte Drehachse 7 eines ersten Drehgelenkes 8 drehbar ausgeführt. Ein Hebel 9 des Viergelenk-Mechanismus 6 steht über ein zweites Drehgelenk 10 drehbar mit der Klappe 4 in Verbindung. Zusätzlich ist der Hebel 9 über ein drittes Drehgelenk 11 mit einem Drehelement 12 drehbar verbunden. Das Drehelement 12 ist um eine karosserieseitig festgelegte Drehachse 13 eines vierten Drehgelenks 14 drehbar ausgeführt.

Des Weiteren ist das Drehelement 12 von einer Federeinrichtung 15 mit einer in Richtung einer Drehstellung des Drehelementes 12 wirkenden Federkraft beaufschlagt. Die Federeinrichtung 15 versucht dabei, das Drehelement 12 in eine Drehstellung zu überführen, die das Drehelement 12 in der Offenstellung der Klappe 4 einnimmt. Zusätzlich greift am äußeren Umfang des Drehelementes 12 ein Bowdenzug 18 an, über den am Drehelement 12 eine Stellkraft bzw. Betätigungskraft anlegbar ist, die der Federkraft der Drehfeder bzw. der Federeinrichtung 15 entgegenwirkt.

Das Drehelement 12 ist als Rolle ausgeführt, auf der ein Teilbereich des Bowdenzuges in Abhängigkeit der jeweiligen Drehrichtung des Drehelementes 12 aufrollbar oder von dieser abwickelbar ist.

In der in Fig. 2 dargestellten Schließstellung der Klappe 4 ist das erste Drehgelenk 8 in Längsrichtung X des Fahrzeuges 1 zwischen dem zweiten Drehgelenk 10 und dem vierten Drehgelenk 14 angeordnet. Zusätzlich ist das dritte Drehgelenk 11 in der Schließstellung der Klappe 4 in Längsrichtung des Fahrzeuges 1 zwischen dem ersten Drehgelenk 8 und dem vierten Drehgelenk 14 positioniert. Darüber hinaus ist das erste Drehgelenk 8 in der Schließstellung der Klappe 4 in Längsrichtung X zwischen dem zweiten Drehgelenk 10 und dem dritten Drehgelenk 11 angeordnet.

Damit liegen der Hebel 9 und das Drehelement 12 in der Schließstellung der Klappe 4 wenigstens annähernd in einer Strecklage vor, in der die Drehachsen 10A, 11A, 13 des zweiten Drehgelenks 10, des dritten Drehgelenks 11 und des vierten Drehgelenks 14 auf einer Geraden G liegen. Dadurch wird verhindert, dass an der Klappe 4 in Fahrzeugquerrichtung Y angreifende Betätigungskräfte ein unerwünschtes Öffnen bzw. Freigeben der Öffnung 5 ermöglichen. Aufgrund der Strecklage des Hebels 9 und des Drehelementes 12 ist die Klappe 4 mit geringen Systemkräften bzw. Federkräften der Federeinrichtung 15 in seiner Schließstellung haltbar.

In der Offenstellung der Klappe 4 weist die Drehachse 11A des dritten Drehgelenkes 11 in Bezug auf die Drehachsen 7, 10A und 13 des ersten Drehgelenks 8, des zweiten Drehgelenks 10 und des vierten Drehgelenks 14 eine Übertotpunktlage auf. Dies bewirkt, dass aus Stellkräften, die an der Klappe 4 in Schließrichtung angreifen, jeweils am Viergelenk-Mechanismus angreifende Betätigungskräfte resultieren. Die Betätigungskräfte greifen dabei jeweils am Drehelement 12 in eine Drehrichtung an, durch die das Drehelement 12 in eine Drehstellung überführt wird, die das Drehelement 12 in der Offenstellung der Klappe 4 aufweist.

Liegt eine entsprechende Anforderung zum Freigeben der Öffnung 5 vor, wird ein in der Zeichnung nicht näher dargestellter Aktuator betätigt und die vom Bowdenzug 18 am Drehelement 12 anliegende Haltekraft dahingehend reduziert, dass die Federeinrichtung 15 das Drehelement 12 um die Drehachse 13 des vierten Drehgelenkes 14 verdreht. Die Drehachse 11A des dritten Drehgelenkes 11 wird dabei aus der in Fig. 2 dargestellten Position in die in Fig. 3 dargestellte Lage verschwenkt. Darüber hinaus wird dabei ein Teil des Bowdenzuges 18 am Umfang des Drehelementes 12 aufgewickelt und die Klappe 4 um die Drehachse 7 des ersten Drehgelenkes 8 aus seiner Schließstellung in seine Offenstellung verschwenkt.

Soll die Klappe 4 anforderungsgemäß aus ihrer Offenstellung in ihre Schließstellung überführt werden, wird mittels des Bowdenzuges 18 am Drehelement 12 eine entsprechende Kraft angelegt, die eine Rotation des Drehelementes 12 um die Drehachse 13 des vierten Drehgelenkes 14 zur Folge hat. Während dieser Drehbewegung des Drehelementes 12 um die Drehachse 13 wird das dritte Drehgelenk 11 gemeinsam mit dem Drehelement 12 verschwenkt bzw. verdreht. Dies führt dazu, dass der Hebel 9 die Klappe 4 um die Drehachse 7 des ersten Drehgelenkes 8 verschwenkt und die Klappe 4 in ihre die Öffnung 5 verschließende Position überführt.

### BEZUGSZEICHENLISTE

- 1: Fahrzeug
- 2: Fahrzeugkarosserie
- 3: Antriebseinheit
- 4: Klappe
- 5: Öffnung
- 6: Mehrgelenk-Mechanismus
- 7: Drehachse
- 8: erstes Drehgelenk
- 9: Hebel
- 10: zweites Drehgelenk
- 10A: Drehachse des zweiten Drehgelenks
- 11: drittes Drehgelenk
- 11A: Drehachse des dritten Drehgelenks
- 12: Drehelement
- 13: Drehachse des vierten Drehgelenks
- 14: viertes Drehgelenk
- 15: Federeinrichtung
- 16: Seitenfläche der Klappe
- 17: Außenseite der Fahrzeugkarosserie
- 18: Bowdenzug
- G: Gerade
- X: Fahrzeuglängsrichtung
- Y: Fahrzeugquerrichtung

## Patentansprüche

1. Fahrzeug (1) mit einer bewegbaren Klappe (4), die über einen Mehrgelenk-Mechanismus (6) zwischen einer Offenstellung, in der eine Öffnung (5) einer Fahrzeugkarosserie (2) von der Klappe (4) freigegeben ist, und einer Schließstellung, in der die Öffnung (5) von der Klappe (4) verschlossen ist, verstellbar ist,
wobei die Klappe (4) um eine karosserieseitig festgelegte Drehachse (7) eines ersten Drehgelenks (8) drehbar ausgeführt ist,
wobei ein Hebel (9) des Mehrgelenk-Mechanismus (6) über ein zweites Drehgelenk (10) drehbar mit der Klappe (4) in Verbindung steht,
und wobei der Hebel (9) zusätzlich über ein drittes Drehgelenk (11) mit einem Drehelement (12) drehbar verbunden ist, das um eine karosserieseitig festgelegte Drehachse (13) eines vierten Drehgelenks (14) drehbar ausgeführt ist,
**dadurch gekennzeichnet, dass**
das Drehelement (12) von einer Federeinrichtung (15) mit einer in Richtung einer Drehstellung des Drehelementes (12) wirkenden Federkraft beaufschlagt ist, die das Drehelement (12) in der Offenstellung oder in der Schließstellung einnimmt, wobei am Drehelement (12) über einen Bowdenzug (18) jeweils eine der Federkraft der Federeinrichtung (15) entgegenwirkende Betätigungskraft anlegbar ist.

2. Fahrzeug nach Anspruch 1,
**dadurch gekennzeichnet, dass**
der Mehrgelenk-Mechanismus (6) als Viergelenk-Mechanismus (6) ausgeführt ist.

3. Fahrzeug nach Anspruch 1 oder 2,
**dadurch gekennzeichnet, dass**
das Drehelement (12) als Rolle ausgeführt ist.

4. Fahrzeug nach Anspruch 1, 2 oder 3,
**dadurch gekennzeichnet, dass**
das erste Drehgelenk (8) in der Schließstellung der Klappe (4) in Längsrichtung (X) zwischen dem zweiten Drehgelenk (10) und dem vierten Drehgelenk (14) angeordnet ist.

5. Fahrzeug nach wenigstens einem der vorstehenden Ansprüche,
**dadurch gekennzeichnet, dass**
das dritte Drehgelenk (11) in der Schließstellung der Klappe (4) in Längsrichtung (X) zwischen dem ersten Drehgelenk (8) und dem vierten Drehgelenk (14) positioniert ist.

6. Fahrzeug nach wenigstens einem der vorstehenden Ansprüche,
**dadurch gekennzeichnet, dass**
das erste Drehgelenk (8) in der Schließstellung der Klappe (4) in Längsrichtung (X) zwischen dem zweiten Drehgelenk (10) und dem dritten Drehgelenk (11) angeordnet ist.

7. Fahrzeug nach wenigstens einem der vorstehenden Ansprüche,
**dadurch gekennzeichnet, dass**
der Hebel (9) und das Drehelement (12) in der Schließstellung der Klappe (4) wenigstens annähernd in einer Strecklage vorliegen, in der die Drehachsen (10A, 11A, 13) des zweiten Drehgelenks (10), des dritten Drehgelenks (11) und des vierten Drehgelenks (14) auf einer Geraden (G) liegen.

8. Fahrzeug nach wenigstens einem der vorstehenden Ansprüche,
**dadurch gekennzeichnet, dass**
die Drehachse (11A) des dritten Drehgelenks (11) in der Offenstellung der Klappe (4) in Bezug auf die Drehachsen (7, 10A, 13) des ersten Drehgelenks (8), des zweiten Drehgelenks (10) und des vierten Drehgelenks (14) eine Übertotpunktlage aufweist, so dass aus an der Klappe (4) anliegenden Stellkräften, die an der Klappe (4) in Richtung ihrer Schließstellung oder ihrer Offenstellung angreifen, jeweils eine das Drehelement (12) in Richtung der Drehstellung, die das Drehelement (12) in der Offenstellung der Klappe (4) aufweist, betätigende Stellkraft resultiert.

9. Fahrzeug nach wenigstens einem der vorstehenden Ansprüche,
**dadurch gekennzeichnet, dass**
eine Seitenfläche (16) der Klappe (4) in der Schließstellung der Klappe (4) bündig mit einer Außenseite (17) der Fahrzeugkarosserie (2) abschließt.

10. Fahrzeug nach wenigstens einem der vorstehenden Ansprüche,
**dadurch gekennzeichnet, dass**
die Klappe (4) in ihrer Offenstellung gegenüber der Schließstellung um die Drehachse (7) des ersten Drehgelenks (8) in das Innere der Fahrzeugkarosserie (2) verschwenkt ist.

## Claims

1. Vehicle (1) with a movable cover (4) which can be moved via a multi-joint mechanism (6) between an open position, in which an opening (5) of a vehicle body (2) is uncovered by the cover (4), and a closed position, in which the opening (5) is closed by the cover (4),
wherein the cover (4) is designed to be rotatable about an axis of rotation (7), fixed on the body, of a first pivot joint (8),
wherein a lever (9) of the multi-joint mechanism (6) is rotatably connected to the cover (4) via a second pivot joint (10),
and wherein the lever (9) is additionally rotatably connected via a third pivot joint (11) to a rotary element (12) which is designed to be rotatable about an axis of rotation (13), fixed on the body, of a fourth pivot joint (14), **characterised in that**
the rotary element (12) is acted upon by a spring device (15) with a spring force which acts in the direction of a rotary position of the rotary element (12) which the rotary element (12) assumes in the open position or in the closed position, wherein an actuating force which counteracts the spring force of the spring device (15) respectively can be applied to the rotary element (12) via a Bowden cable (18).

2. Vehicle according to claim 1,
**characterised in that** the multi-joint mechanism (6) is designed as a four-joint mechanism (6).

3. Vehicle according to claim 1 or 2,
**characterised in that** the rotating element (12) is designed as a roll.

4. Vehicle according to claim 1, 2 or 3,
**characterised in that**, in the closed position of the cover (4), the first pivot joint (8) is arranged in the longitudinal direction (X) between the second pivot joint (10) and the fourth pivot joint (14).

5. Vehicle according to at least one of the preceding claims, **characterised in that**, in the closed position of the cover (4), the third pivot joint (11) is positioned in the longitudinal direction (X) between the first pivot joint (8) and the fourth pivot joint (14).

6. Vehicle according to at least one of the preceding claims, **characterised in that**, in the closed position of the cover (4), the first pivot joint (8) is arranged in the longitudinal direction (X) between the second pivot joint (10) and the third pivot joint (11).

7. Vehicle according to at least one of the preceding claims, **characterised in that** the lever (9) and the rotary element (12) are, in the closed position of the cover (4), at least approximately in an extended position in which the axes of rotation (10A, 11A, 13) of the second pivot joint (10), the third pivot joint (11) and the fourth pivot joint (14) lie on a straight line (G).

8. Vehicle according to at least one of the preceding claims, **characterised in that** the axis of rotation (11A) of the third pivot joint (11), in the open position of the cover (4), has an over-dead-centre position in relation to the axes of rotation (7, 10A, 13) of the first pivot joint (8), the second pivot joint (10) and the fourth pivot joint (14), so that an actuating force which actuates the rotary element (12) in the direction of the rotary position which the rotary element (12) has in the open position of the cover (4) is resulting from actuating forces which are acting on the cover (4) and are acting the cover (4) in the direction of its closed position or its open position.

9. Vehicle according to at least one of the preceding claims, **characterised in that**, in the closed position of the cover (4), a side surface (16) of the cover (4) is flush with an outer side (17) of the vehicle body (2).

10. Vehicle according to at least one of the preceding claims, **characterised in that** the cover (4), in its open position, is pivoted into the interior of the vehicle body (2) about the axis of rotation (7) of the first pivot joint (8) into the interior of the vehicle body (2).

## Revendications

1. Véhicule (1) avec un couvercle mobile (4) qui peut être déplacé par un mécanisme à articulations multiples (6) entre une position ouverte, dans laquelle une ouverture (5) d'une carrosserie de véhicule (2) est découverte par le couvercle (4), et une position fermée, dans laquelle l'ouverture (5) est fermée par le couvercle (4),
dans laquelle le couvercle (4) est conçu pour être rotatif autour d'un axe de rotation (7), fixé sur la carrosserie, d'une première articulation pivotante (8), dans lequel un levier (9) du mécanisme à articulations multiples (6) est relié de manière rotative au couvercle (4) par l'intermédiaire d'une deuxième articulation pivotante (10),
et dans lequel le levier (9) est en outre relié de manière rotative par une troisième articulation pivotante (11) à un élément rotatif (12) conçu pour tourner autour d'un axe de rotation (13), fixé sur la carrosserie, d'une quatrième articulation pivotante (14),
**caractérisé en ce que**
l'élément rotatif (12) est sollicité par un dispositif à ressort (15) dont la force agit dans le sens d'une position rotative de l'élément rotatif (12) que l'élément rotatif (12) prend en position ouverte ou en position fermée, une force d'actionnement s'opposant à la force du ressort du dispositif à ressort (15) pouvant être appliquée à l'élément rotatif (12) par l'intermédiaire d'un câble Bowden (18).

2. Véhicule selon la revendication 1,
**caractérisé par le fait que** le mécanisme à articulations multiples (6) est conçu comme un mécanisme à quatre articulations (6).

3. Véhicule selon la revendication 1 ou 2,
**caractérisé par le fait que** l'élément rotatif (12) est conçu comme un rouleau.

4. Véhicule selon la revendication 1, 2 ou 3,
**caractérisé par le fait que**, dans la position fermée du couvercle (4), la première articulation pivotante (8) est disposée dans la direction longitudinale (X) entre la deuxième articulation pivotante (10) et la quatrième articulation pivotante (14).

5. Véhicule selon au moins une des revendications précédentes, **caractérisé par le fait que**, dans la position fermée du couvercle (4), la troisième articulation pivotante (11) est positionnée dans la direction longitudinale (X) entre la première articulation pivotante (8) et la quatrième articulation pivotante (14).

6. Véhicule selon au moins une des revendications précédentes, **caractérisé par le fait que**, dans la position fermée du couvercle (4), la première articulation pivotante (8) est disposée dans la direction longitudinale (X) entre la deuxième articulation pivotante (10) et la troisième articulation pivotante (11).

7. Véhicule selon au moins une des revendications précédentes, **caractérisé en ce que** le levier (9) et l'élément rotatif (12) sont, en position fermée du couvercle (4), au moins approximativement dans une position étendue dans laquelle les axes de rotation (10A, 11A, 13) de la deuxième articulation pivotante (10), de la troisième articulation pivotante (11) et de la quatrième articulation pivotante (14) se situent sur une ligne droite (G).

8. Véhicule selon au moins une des revendications précédentes, **caractérisé en ce que** l'axe de rotation (11A) de la troisième articulation pivotante (11), dans la position ouverte du couvercle (4), a une position excentrée par rapport aux axes de rotation (7, 10A, 13) de la première articulation pivotante (8), de la deuxième articulation pivotante (10) et de la quatrième articulation pivotante (14), de sorte qu'une force d'actionnement qui actionne l'élément rotatif (12) dans la direction de la position rotative que l'élément rotatif (12) a dans la position ouverte du couvercle (4) résulte de forces d'actionnement qui agissent sur le couvercle (4) et qui agissent sur le couvercle (4) dans la direction de sa position fermée ou de sa position ouverte.

9. Véhicule selon au moins une des revendications précédentes, **caractérisé par le fait que**, dans la position fermée du couvercle (4), une surface latérale (16) du couvercle (4) affleure un côté extérieur (17) de la carrosserie du véhicule (2).

10. Véhicule selon au moins une des revendications précédentes,
**caractérisé en ce que** le couvercle (4), dans sa position ouverte, est pivoté à l'intérieur de la carrosserie du véhicule (2) autour de l'axe de rotation (7) de la première articulation pivotante (8) à l'intérieur de la carrosserie du véhicule (2).
